# EUROPEAN PATENT APPLICATION

(11) **EP 1 703 614 A2**
(43) Date of publication of application: **20.09.2006**
(21) Application number: 06004255.3
(22) Date of filing: 02.03.2006
(51) Int. Cl.: H02J 3/40

(54) **Power conditioner**

(30) Priority: 14.03.2005 JP 2005071209
(71) Applicant: OMRON CORPORATION, Kyoto-shi, Kyoto 600-8530 (JP)
(72) Inventor: Mabuchi, Masao c/o Omron Corporation, 801, Shimogyo-ku, Kyoto-shi,Kyoto 600-8530 (JP); Toyoura, Nobuyuki c/o Omron Corporation, 801, Shimogyo-ku, Kyoto-shi,Kyoto 600-8530 (JP); Tsubota, Yasuhiro c/o Omron Corporation, 801, Shimogyo-ku, Kyoto-shi,Kyoto 600-8530 (JP); Oka, Seiji c/o Omron Corporation, 801, Shimogyo-ku, Kyoto-shi, Kyoto 600-8530 (JP)
(74) Representative: Kilian, Helmut

(57) **Abstract**

A single operation detecting means (6) for changing the output current (IX) in synchronization with the period of the alternating voltage on the system side thereby fluctuating the output voltage (active voltage) (VX) and the output power (active power) (PX) during the operation of the power converting device (4), measuring the output current (IX) and the output voltage (active voltage) (VX) output from the power converting device (4), calculating the output power (active power) (PX) from the measured output current (IX) and the output voltage (active voltage) (VX) and calculating the combined (parallel) impedance (Rp) of the load resistance (Rh) and the line impedance (R1) seen from the output terminals (C, D) based on the output current (IX), the output voltage (active voltage) (VX), and the output power (active power) (PX) is provided.

## Description

### BACKGROUND OF THE INVENTION

### 1. Field of the Invention

The present invention relates to power conditioners for detecting abnormality on the system side by measuring the line impedance on the system side, more particularly, to a power conditioner for detecting the presence of abnormality on the system side by changing the output current thereby fluctuating the active power and the active voltage to be output to the system side and measuring the line impedance.

### 2. Description of the related art

Since the conventional power conditioner prevents the power conditioner from operating in isolation when abnormality occurs on the system side, the presence of single operation is determined by measuring and monitoring the line impedance on the system side.

When measuring the line impedance on the system line side, the output current of the power conditioner is changed, the output power as well as the output voltage are fluctuated and measured, and then calculation is performed.

For instance, when changing the output current of the power conditioner, the output power and the output voltage that fluctuates are fluctuated by applying (superimposing) the pulse current or applying (superimposing) the high frequency current on the output current, and then measured to calculate the line impedance.

As disclosed in "DE19504271C1 (German patent)", in the conventional power conditioner, the capacitor and the inductance are connected in parallel to the output by way of a switch, and the phase difference between the output voltage of when the switch is turned ON and the reactive current is flowed and the output voltage of when the switch is turned OFF and the reactive current is not flowed is detected, and the line impedance is determined from the phase difference.

The single operation detecting function of the power conditioner is essential in Germany and the fluctuation in line impedance value is standardized, which standard is assumed to be applied to EC countries in the future.

Further, with growing number of cases in which a plurality of power conditioners are connected to one system, a case of one power conditioner measuring the line impedance while another power conditioner is measuring the line impedance must be considered.

### SUMMARY OF THE INVENTION

In the conventional power conditioner, either the pulse current is applied (superimposed) or the high frequency current is applied (superimposed) when changing the output current. If the pulse current is applied, noise may be generated on the system side, whereas if the high frequency current is applied, the power line communication and the like may be adversely affected.

The power conditioner disclosed in "DE19504271C1 (German patent)", determines the line impedance from the phase difference between the output voltage of when the capacitor and the impedance are connected in parallel to the output and reactive current is flowed, and the output voltage of when the capacitor and the impedance are separated from the output and the reactive current is not flowed, but this increases the number of components since the capacitor, the inductance, the switch and the like must be added to the power conditioner.

Further, when a plurality of power conditioners are connected in parallel to one system, the fluctuations of the output voltage or the output power to be measured interfere if the timing for operating the single operation detecting function of each power conditioner overlaps, whereby an accurate line impedance cannot be detected.

To solve the above problem, the present invention aims to provide a power conditioner capable of measuring the line impedance without adversely affecting the system side by slightly increasing or decreasing the output current and fluctuating the active power and the active voltage.

In order to solve the above problems, the power conditioner of the invention includes a single operation detecting means for changing the output current in synchronization with the period of the alternating voltage on the system side thereby fluctuating the active power and the active voltage to be output to the system side, and measuring the line impedance on the system side based on the fluctuated active power and the active voltage.

The power conditioner of the invention determines the presence of abnormality on the system side by measuring the active power and the active voltage, and calculating the line impedance from the measured active power and the active voltage by including a single operation detecting means for changing the output current in synchronization with the period of the alternating voltage on the system side thereby fluctuating the active power and the active voltage to be output to the system side, and measuring the line impedance on the system side based on the fluctuated active power and the active voltage.

Further, the single operation detecting means of the invention fluctuates the active power and the active voltage in synchronization with the alternating voltage on the system side when fluctuating the active power and the active voltage to be output to the system side.

Since the single operation detecting means of the invention fluctuates the active power and the active voltage in synchronization with the alternating voltage on the system side when fluctuating the active power and the active voltage to be output to the system side, the influence on the system side involved in the fluctuation of the active power and the active voltage is suppressed.

Further, the single operation detecting means of the invention performs an averaging process on a value around the time of fluctuation of the active power and the active voltage to be output to the system side and measures the line impedance on the system side based on the average processed value when measuring the line impedance value on the system side.

Since the single operation detecting means of the invention performs an averaging process on a value around the time of fluctuation of the active power and the active voltage to be output to the system side and measures the line impedance value based on the average processed value when measuring the line impedance value on the system side, the active power and the active voltage that are irregularly generated are not utilized in the calculation of the line impedance.

Moreover, the single operation detecting means of the invention fluctuates the active power and the active voltage to be output to the system side from zero crossing to zero crossing.

Since the single operation detecting means of the invention fluctuates the active power and the active voltage to be output to the system side from zero crossing to zero crossing, the fluctuation of the active power and the active voltage for one period or a plurality of periods is averaged.

Further, the single operation detecting means of the invention gradually fluctuates the active power and the active voltage to be output to the system side.

Since the single operation detecting means of the invention gradually fluctuates the active power and the active voltage to be output to the system side, the fluctuation of the active power and the active voltage is reduced.

The single operation detecting means of the invention alternately increases and decreases the active power and the active voltage to be output to the systems side for every period so that the total amount of change of the output current and the active voltage is approximately zero.

Since he single operation detecting means of the invention alternately increases and decreases the active power and the active voltage to be output to the systems side for every predetermined period so that the total amount of change of the output current and the active voltage is approximately zero, the active power and the active voltage are prevented from increasing.

Further, the single operation detecting means of the invention compares the line impedance value measured in the past and the line impedance value currently measured when a plurality of power conditioners are connected in parallel to the same system, and when the current line impedance value is an impedance value greater than the past line impedance value, determines that the other device simultaneously operating in parallel with self device is also measuring the impedance value and does not determine the current line impedance value as an abnormal value.

Since he single operation detecting means of the invention compares the line impedance value measured in the past and the line impedance value currently measured during in parallel operation, and when the current line impedance value is an impedance value greater than the past line impedance value, determines that the other device simultaneously operating in parallel with the self device is also measuring the impedance value and does not determine the current line impedance value as an abnormal value, the measurement result is deleted when the self device and the other device, which are operating in parallel, are simultaneously measuring the impedance value.

The single operation detecting means of the invention does not determine the line impedance value as an abnormal value when the deviation of the line impedance value at the start of change and the end of change of the active power and the active voltage to be output to the system side is greater than or equal to a constant value when a plurality of power conditioners are connected to the same system and operating in parallel.

Since the single operation detecting means of the invention does not determine the line impedance value as an abnormal value when the deviation of the line impedance values at the start of change and the end of change of the active power and the active voltage to be output to the system side is greater than or equal to a constant value, the measurement result is deleted when the self device and the other device, which are operating in parallel, are simultaneously measuring the line impedance value.

Further, the single operation detecting means of the invention executes the measurement of the line impedance value with the time shifted with respect to each other when the measurements of the line impedance values by the self device and the other device, operating in parallel, are synchronized when a plurality of power conditioners are connected to the same system and operated in parallel.

Since the single operation detecting means of the invention executes the measurements of the line impedance value by shifting the measurements by a predetermined time with respect to each other when the measurements of the line impedance values by the self device and the other device, operating in parallel, are synchronized, the self device and the other device individually measures the line impedance value by setting a time difference when the self device and the other device are measuring the line impedance value in synchronization while being operated in parallel.

A power conditioner of the invention determines the presence of abnormality on the system side by measuring the active power and the active voltage and calculating the line impedance from the measured active power and the active voltage by including a single operation detecting means for changing the output current in synchronization with the period of the alternating voltage on the system side thereby fluctuating the active power and the active voltage to be output to the system side, and measuring the line impedance on the system side based on the fluctuated active power and the active voltage, and the single operation detecting means is realized with a simple configuration without particularly adding components.

Since the single operation detecting means of the invention fluctuates the active power and the active voltage in synchronization with the alternating voltage on the system side when fluctuating the active power and the active voltage to be output to the system side, the influence on the system side involved in the fluctuation of the active power and the active voltage is suppressed as much as possible, and the single operation detecting function can be operated during the operation of the power conditioner.

### BRIEF DESCRIPTION OF THE DRAWINGS

The invention, together with objects and advantages thereof, may best be understood by reference to the following description of the presently preferred embodiments together with the accompanying drawings in which:

FIG. 1 shows a system configuration view according to one embodiment of a solar energy generating system applied with a power conditioner according to the present invention;
FIG. 2 shows a waveform chart explaining one embodiment of a line impedance measurement according to the present invention;
FIG. 3 shows a waveform chart explaining another embodiment of the line impedance measurement according to the present invention;
FIG. 4 shows a waveform chart explaining another embodiment of the line impedance measurement according to the present invention;
FIG. 5 shows a system configuration view according to another embodiment of a solar energy generating system applied with a power conditioner according o the present invention;
FIG. 6 shows a waveform chart of an output current/output voltage of one embodiment during the operation of a single operation detecting function of the power conditioner according to the present invention; and
FIG. 7 shows a waveform chart of an output current/output voltage of another embodiment during the operation of a single operation detecting function of the power conditioner according to the present invention.

### DETAILED DESCRIPTION OF THE PREFERRED EMBODIMENTS

The embodiment of the present invention will now be described based on the accompanying drawings. The basic technical concept of the present invention is to determine the abnormality on the system side by changing the output current of the power conditioner in synchronization with the period of the alternating voltage on the system side thereby fluctuating the active power and the active voltage to be output to the system side, and measuring the line impedance value on the system side based on the fluctuated active power and the active voltage.

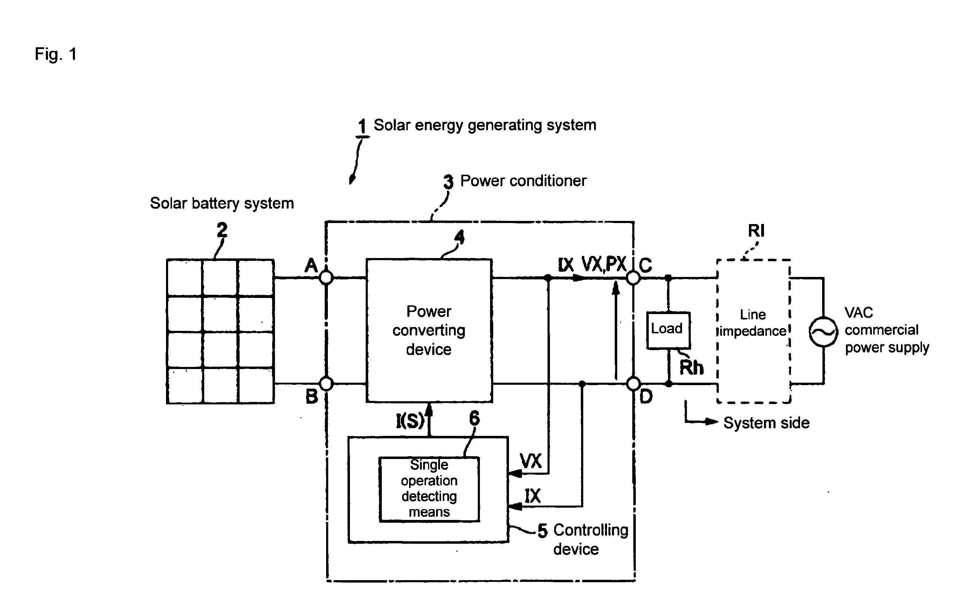

FIG. 1 is a system configuration view of one embodiment of a solar energy generating system applied with the power conditioner according to the present invention. In FIG. 1, the solar energy generating system 1 is configured by a solar battery system 2 for converting the solar light to a direct current power; a power conditioner 3 for converting the direct power supplied from the solar battery system 2 via input terminals A, B to an alternating current synchronized with a system side power supply (commercial power supply) VAC and supplying the output power (active power) PX to a load resistance Rh via output terminals C, D; and a system side power supply (commercial power supply) VAC.

The power conditioner 3 includes a power converting device 4 for converting the direct power supplied from the solar battery system 2 to the alternating power synchronized with the frequency and the alternating voltage of the system side (commercial power supply), and a controlling device 5 for controlling the operation of the power converting device 4.

The controlling device 5 is configured on the basis of CPU (Central Processing Unit), and executes the output control, the frequency control, and the over current or over voltage control of the power converting device 4.

The controlling device 5 includes a single operation detecting means 6 for controlling the output current IX thereby fluctuating the output power (active power) PX and the output voltage (active voltage) VX to be output to the system side during the operation of the power conditioner 3 and measuring the line impedance value R1 on the system side based on the fluctuated active power PX and the active voltage VX, and thus determines the presence of abnormality (e.g., blackout) on the system side by measuring the active power PX and the active voltage VX and calculating the line impedance R1 from the measured active power PX and the active voltage VX.

The single operation detecting means 6 provides a set current I(S) at a predetermined interval in synchronization with the period of the alternating voltage on the system side as a command value and changes the output current IX thereby fluctuating the output voltage (active voltage) VX and the output power (active power) PX, measures the output current IX and the output voltage (active voltage) VX output from the power converting device 4, calculates the output power (active power) PX from the measured output current IX and the output voltage (active voltage) VX, and calculates the combined (parallel) impedance of the load resistance Rh and the line impedance R1 seen from the output terminals C, D based on the output current IX, output voltage (active voltage) VX and the output power (active power) PX. When the fluctuation of the line impedance R1 exceeds a standard value Rk, (R1 ≥ Rk), determination is made as single operation with the system side in the abnormal state, whereby a relay (not shown) is opened to separate the power conditioner 3 from the system side.

According to the feature of the present invention, the active current, the active voltage, and the active power same as the power conditioner 3 in operation are output to the system side by executing the output current IX, the output voltage (active voltage) VX, and the output power (active power) PX in the region of the active current, the active voltage, and the active power, and thus the system side is not affected. Further, the single operation detecting means 6 is configured by software process without adding additional components to the power conditioner 3.

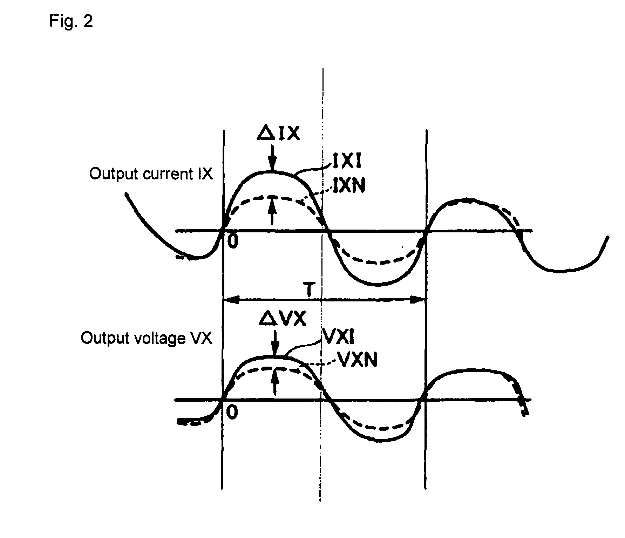

The detection of the line impedance R1 on the system side will now be explained. FIG. 2 is a waveform chart explaining one embodiment of the line impedance measurement according to the present invention. In FIG. 2, the single operation detecting means 6 outputs, in correspondence to one period T in which the output current IX is changed to the increased output current IXI (shown with solid line) with the level increased from one period T of the normal output current IXN (shown with broken line), the output voltage (active voltage) VX of one period T of the normal output voltage VXN (shown with broken line) and the increased output voltage VXI (shown with solid line), in synchronization with each other, from the power converting device 4 to the system side. When changing the output current IX, the single operation detecting means 6 performs control so that the output voltage (active voltage) VX fluctuates in synchronization with the alternating power supply VAC on the system side.

The current fluctuation amount ΔIX, which is the fluctuation between the increased output current IXI which level is increased and the normal output current IXN, is expressed as ΔIX = (IXI - IXN), and the voltage fluctuation amount ΔVX, which is the fluctuation between the increased output voltage VXI corresponding to the increased output current IXI and the normal output voltage VXN corresponding to the normal output current VXN current, is expressed as ΔVX = (VXI - VXN). The fluctuation impedance of the combined (parallel) impedance Rp of the load resistance Rh and the line impedance R1 is thus calculated by ΔRp = ΔVX ÷ ΔIX.

The combined (parallel) impedance Rp is expressed as Rp = (Rh x R1) ÷ (Rh + R1). The abnormality (single operation) on the system side is detected based on the fluctuation impedance ΔRp if the load resistance Rh does not fluctuate during the period T shown in FIG. 2 since the fluctuation impedance ΔRp becomes the fluctuation of the line impedance R1.

The output voltage (active voltage) PX is calculated by the product (PX=IXxVX) of the output current IX and the output voltage (active voltage) VX, and generally, the relationship between the impedance Z and the power P is calculated by P = V² ÷ Z or P = I² × Z. The fluctuation impedance ΔRp can thus be calculated from ΔRp = ΔVX² ÷ ΔPX or the fluctuation impedance ΔRp=ΔPX÷IX².

As such, since the single operation detecting means 6 according to the present invention fluctuates the active power PX and the active voltage VX to be output in synchronization with the alternating current VAC on the system side when fluctuating the active power PX and the active voltage VX to be output to the system side, the influence on the system side involved with the fluctuation of the active power PX and the active voltage VX is suppressed as much as possible, and the single operation detecting function can be operated during the operation of the power conditioner 3.

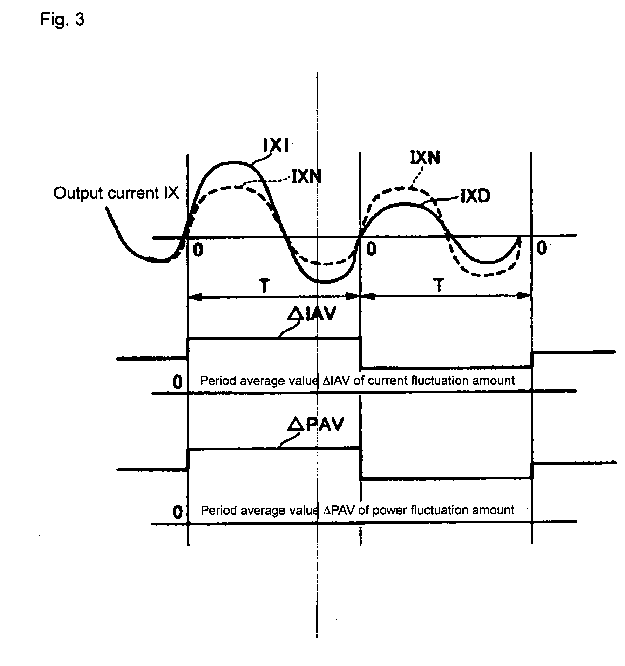

FIG. 3 is a waveform chart explaining another embodiment of the line impedance measurement according to the present invention. In FIG. 3, the single operation detecting means 6 performs control so as to output the increased output current IXI (shown in solid line), in which the level of the output current IX is increased in correspondence to one period T of the normal output current IXN (shown in broken line) for one period T, and to output the decreased output current IXD (shown in solid line), in which the level is decreased, in the next period.

The increased output current IXI (shown in solid line) which level is increased is output in the first period, and the decreased output current IXD (shown in solid line) which level is decreased is output in the next period, and the increased amount of level and the decreased amount of level are set equal. The average between the two periods thus becomes zero, and the influence on the system side due to the fluctuation of the output current IX cancels out.

The fluctuation of the output current IX is set so as to occur in units of period and in a range from zero crossing to zero crossing, and so as to gradually change the level of the increased output current IXI (shown in solid line) and the decreased output current IXD (shown in solid line).

Further, the single operation detecting means 6 performs an averaging process on the current fluctuation amount ΔIX (=IXI - IXN, IXD - IXN) of the normal output current (shown in broken line) and the increased output current IXI (shown in solid line) which level is increased or the decreased output current IXD (shown in solid line) which level is decreased for every one period to calculate the period average value ΔIAV of the current fluctuation amount, and calculates the period average value ΔPAV of the power fluctuation amount from the period average value ΔIAV of the current fluctuation amount.

The fluctuation impedance ΔRp of the line impedance R1 is calculated from the period average value ΔIAV of the current fluctuation amount and the period average value ΔPAV of the power fluctuation amount or by ΔRp = ΔPAV ÷ (ΔIAV)². The calculation of the fluctuation impedance ΔRp is performed for the first period and the next period, respectively.

Therefore, the single operation detecting means according to the present invention is capable of averaging the fluctuation of the active power and the active voltage for one period or a plurality of periods and minimizing the influence on the system side of the power consumption since the fluctuation of the output power (active power) PX and the output voltage (active voltage) VX to be output to the system side is fluctuated from zero crossing to zero crossing.

Further, the single operation detecting means according to the present invention is capable of reducing the fluctuation of the active power and the active voltage and minimizing the influence on the system side involved in the fluctuation of the active power and the current voltage since the output power (active power) PX and the output voltage (active voltage) VX to be output to the system side is gradually fluctuated.

Moreover, the single operation detecting means according to the present invention is capable of calculating a stable line impedance value because the active power and the active voltage that are irregularly generated are not used in the calculation of the line impedance since the average processing is performed on the value around the time of fluctuation of the active power and the active voltage to be output to the system side and measurement is performed based on the average processed value when measuring the line impedance value on the system side.

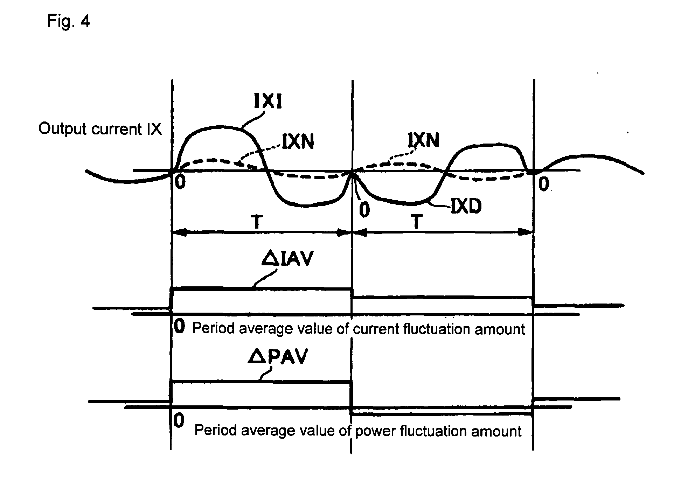

FIG. 4 is a waveform chart explaining another embodiment of the line impedance measurement according to the present invention. In FIG. 4, the single operation detecting means 6 performs control so as to output the increased output current IXI (shown in solid line) in which the level of the output current IX is increased in correspondence to one period T of the normal output current IXN (show in broken line) for one period T, and to alternately output the decreased output current IXD (shown in solid line) in which the level is decreased (inverted) by equal amount for the next period.

The period average value ΔIAV of the current fluctuation amount and the period average value ΔPAV of the power fluctuation amount are calculated by performing average processing on the current fluctuation amount ΔIX (=IXI - IXN, IXD - IXN) as explained in FIG. 3.

The calculation of the line impedance R1 and the fluctuation impedance Rp are performed as explained in FIG. 3.

The difference with FIG. 3 is that there is positive (+) and negative (-) in the period average value ΔPAV of the power fluctuation amount.

The period average value ΔPAV of the power fluctuation amount of positive polarity is applied for one period, and the period average value ΔPAV of the power fluctuation amount of negative polarity is applied to another period for the calculation of the fluctuation impedance △Rp. The fluctuation impedance ΔRp can thus be accurately calculated based on the period average value ΔPAV of the power fluctuation amount having different polarities.

Therefore, the single operation detecting means 6 according to the present invention is capable of preventing the active power and the active voltage from increasing, and of operating the single operation function while minimizing the fluctuation of the active power and the active voltage as much as possible since the active power PX and the active voltage VX to be output to the system side are alternately increased and decreased for every predetermined period so that the total amount of change of the active power PX and the active voltage VX is approximately zero.

As explained above, the power conditioner 3 according to the present invention includes a single operation detecting means 6 for changing the output current IX in synchronization with the period of the alternating voltage on the system side thereby fluctuating the active power PX and the active voltage VX to be output to the system side and measuring the line impedance value R1 on the system side based on the fluctuated active power PX and the active voltage VX, and thus the presence of abnormality on the system side is determined by measuring the active power and the active voltage and calculating the line impedance from the measured active power and the active voltage, and the single operation detecting function is realized with a simple configuration without particularly adding components.

A case of when a plurality of power conditioners are connected in parallel to one system and the single operation detecting functions are operated at the same timing will now be explained.

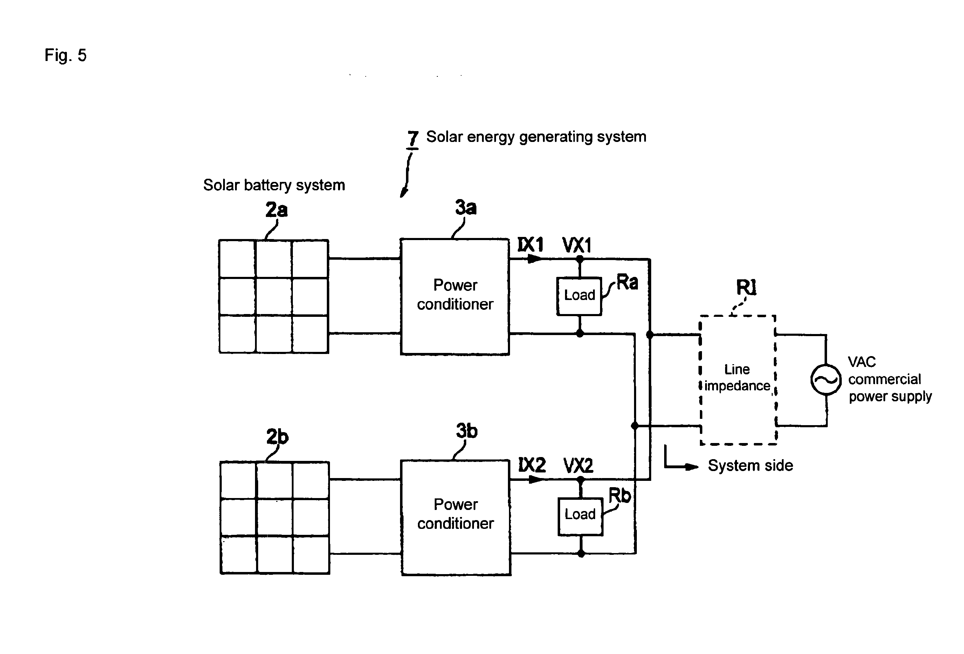

FIG. 5 is a system configuration view of another embodiment of a solar energy generating system applied with the power conditioner according to the present invention. In FIG. 5, the solar energy generating system 7 has two power conditioners, the power conditioner 3a connected to the solar battery system 2a and the power conditioner 3b connected to the solar battery system 2b, connected in parallel to one system side power supply (commercial power supply) VAC.

The load resistance Ra and the load resistance Rb are connected to the power conditioner 3a and the power conditioner 3b, respectively, where the output current IX1 and the output voltage (active voltage) VX1 are supplied from the power conditioner 3a to the load resistance Ra, and the output current IX2 and the output voltage (active voltage) VX2 are supplied from the power conditioner 3b to the load resistance Rb.

The output current IX1, the output voltage (active voltage) VX1, the output current IX2, and the output voltage (active voltage) VX2 are synchronized with the system side power supply (commercial power supply) VAC.

A case of when the power conditioner 3a and the power conditioner 3b simultaneously operate the single operation detecting function in such state will now be explained.

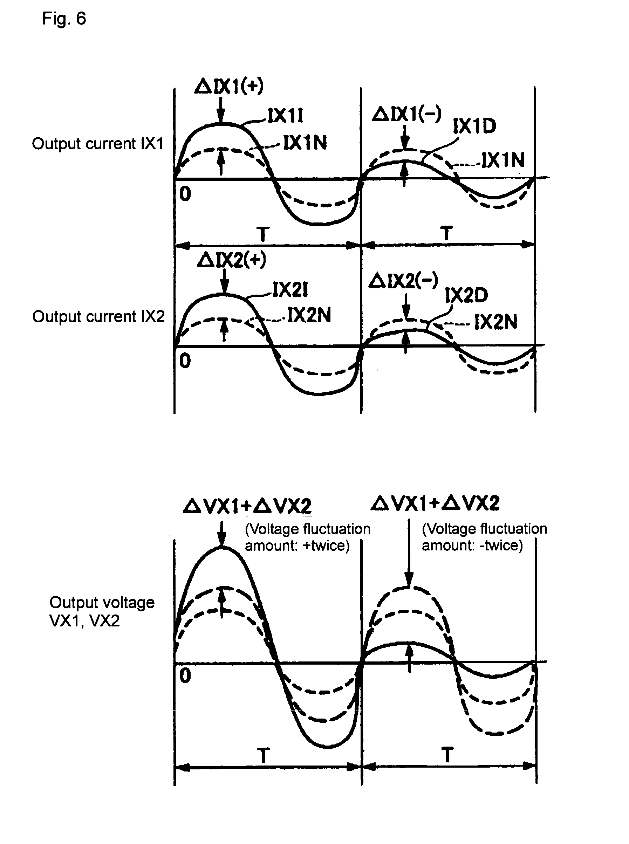

FIG. 6 is a waveform chart of the output current/output voltage of one embodiment during the operation of the single operation detecting function of the power conditioner according to the present invention. The power conditioner 3a and the power conditioner 3b respectively outputs the same level of increased output current IX1I (shown in solid line) and increased output current IX2I (shown in solid line) synchronized with the normal output current IX1 N (shown in broken line) and the normal output current IX2N (shown in broken line), respectively, in the first period T, and outputs the same level of decreased output current IX1 D (shown in solid line) and the decreased output current IX2D (shown in solid line) synchronized with the normal output current IX1N (shown in broken line) and the normal output current IX2N (shown in solid line), respectively, in the next period T.

In this case, the current fluctuation amount ΔIX1 of the output current IX1 of the power conditioner 3a is a positive (+) change of the increased output current IX1I - normal output current IX1 N (ΔIX1 = IX1I - IX1 N > 0) in the first period T, and is a negative (-) change of the decreased output current IX1 D - normal output current IX1N (ΔIX1 = IX1D - IX1N < 0) in the next period T.

The current fluctuation amount ΔIX2 of the output current IX2 of the power conditioner 3b is a positive (+) change of the increased output current IX2I-normal output current IX2N (ΔIX2 = IX2I - IX2N > 0) in the first period T, and is a negative (-) change of the decreased output current IX2D - normal output current IX2N (ΔIX2 = IX2D - IX2N < 0) in the next period T.

The voltage fluctuation amounts at the output end of the power conditioner 3a and the power conditioner 3b are a common value and are the sum (= ΔVX1 + ΔVX2) of the voltage fluctuation amount ΔVX1 arising from the current fluctuation amount ΔIX1 of the output current IX1 and the voltage fluctuation amount ΔVX2 arising from the current fluctuation amount ΔIX2 of the output current IX2.

Since the current fluctuation amount ΔIX1 and the current fluctuation amount ΔIX2 are positive (+) in the first period T, the total voltage fluctuation amount becomes voltage fluctuation amount ΔVX1 + voltage fluctuation amount ΔVX2 if current fluctuation amount ΔIX1 = current fluctuation amount ΔIX2, and the voltage fluctuation amount becomes + twice the voltage fluctuation amount of when there is either power conditioner 3a or the power conditioner 3b if voltage fluctuation amount ΔVX1 = voltage fluctuation amount ΔVX2.

Since the current fluctuation amount ΔIX1 and the current fluctuation amount ΔIX2 are negative (-) in the next period T, the total voltage fluctuation amount becomes voltage fluctuation amount ΔVX1 + voltage fluctuation amount ΔVX2 if current fluctuation amount ΔIX1 = current fluctuation amount ΔIX2, and the voltage fluctuation amount becomes - twice the voltage fluctuation amount of when there is either power conditioner 3a or the power conditioner 3b if voltage fluctuation amount ΔVX1 = voltage fluctuation amount ΔVX2.

Looking at this state in terms of the single operation detecting function of the power conditioner 3a, for example, the voltage fluctuation amount becomes ΔVX1 + ΔVX2 (=2 ΔVX1) with respect to the current fluctuation amount ΔIX1, and thus the fluctuation impedance ΔRp of the line impedance R1 becomes 2ΔVX1÷ΔIX1 in the first period T, which is + twice of when only the power conditioner 3a is provided.

In the next period T, the voltage fluctuation amount becomes ΔVX1 + ΔVX2 (=-2ΔVX1) with respect to the current fluctuation amount ΔIX1, and thus the fluctuation impedance ΔRp of the line impedance R1 becomes -2ΔVX1÷ΔIX1, which is - twice of when only the power conditioner 3a is provided.

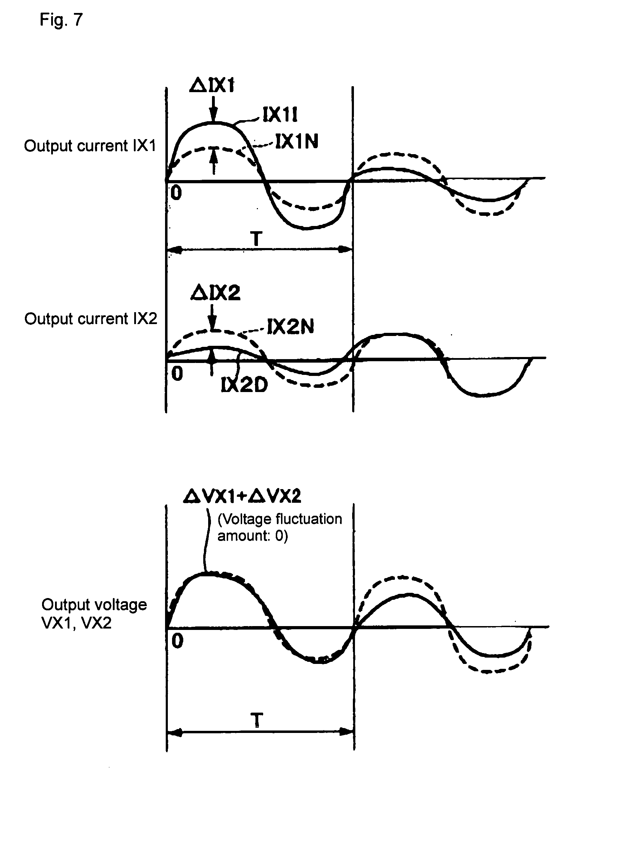

FIG. 7 is a waveform chart of the output current/output voltage of another embodiment during the operation of the single operation detecting function of the power conditioner according to the present invention. In FIG. 7, if the current fluctuation amount ΔIX1 of the power conditioner 3a is positive (+) and the current fluctuation amount ΔIX2 of the power conditioner 3b is negative (-) in a certain period T, and the current fluctuation amount ΔIX1 + current fluctuation amount ΔIX2 = 0, the sum of the voltage fluctuation amount ΔVX1 and the voltage fluctuation amount ΔVX2 cancels out (ΔVX1+ΔVX2=0), when seen in terms of the single operation detecting function of the power conditioner 3a, for example, the voltage fluctuation amount ΔVX1+ΔVX2 (=0) is obtained with respect to the current fluctuation amount ΔIX1 and thus the fluctuation impedance ΔRp of the line impedance R1 becomes ΔVX1+ΔVX2 (=0) ÷ ΔIX1, which is a value (=0) far smaller than when only the power conditioner 3a is provided.

In order to counter such state, the power conditioner 3a and the power conditioner 3b compare the line impedance value (fluctuation impedance ΔRp) measured in the past and the line impedance (fluctuation impedance ΔRp) currently measured, and when the current line impedance value (fluctuation impedance ΔRp) is an impedance value (fluctuation impedance ΔRp) greater than the past line impedance value (fluctuation impedance ΔRp) or an impedance value (fluctuation impedance ΔRp) smaller than the past line impedance value (fluctuation impedance ΔRp), determines that the other device (power conditioner 3b) simultaneously operating in parallel with the self device (power conditioner 3a) is also measuring the line impedance and does not determine the current line impedance value as an abnormal value.

Since the fluctuation impedance ΔRp is not determined as an abnormal value when the fluctuation impedance ΔRp arising from the current fluctuation amount ΔIX1 and the current fluctuation amount ΔIX2 of the output current IX1 and the output current IX2 or the voltage fluctuation amount ΔVX1 and the voltage fluctuation amount ΔVX2 of the output voltage (active voltage) VX1 and the output voltage (active voltage) VX2 is calculated with a deviation of greater than or equal to a constant value at the start of change (first period T) and the end of the change (next period T), as in the first period T and the next period T of FIG. 6, the single operation detecting functions of the power conditioner 3a and the power conditioner 3b are determined as simultaneously operating and the calculation result of the fluctuation impedance ΔRp is deleted.

Thus, the single operation detecting means 6 according to the present invention compares the line impedance value (fluctuation impedance ΔRp) measured in the past and the line impedance (fluctuation impedance ΔRp) currently measured, and when the current line impedance value is an impedance value greater than the past line impedance value, determines that the other device (power conditioner 3b) simultaneously operating in parallel with the self device (power conditioner 3a) is also measuring the line impedance value (fluctuation impedance ΔRp) and does not determine the current line impedance value as the abnormal value, and thus the measurement result is deleted when the self device and the other device, which are operating in parallel, are simultaneously measuring the line impedance value, and the error detection of the single operation is prevented.

Further, the single operation detecting means 6 according to the present invention does not determine the line impedance value (fluctuation impedance ΔRp) as an abnormal value when the deviation of the line impedance value (fluctuation impedance ΔRp) at the start of change (first period T) and at the end of change (next period T) of the active power and the active voltage to be output to the system side is greater than or equal to a constant value, and thus when the self device (power conditioner 3a) and the other device (power conditioner 3b), which are operating in parallel, are simultaneously measuring the line impedance, the measurement result is deleted and the error detection of the single operation is prevented.

In order to prevent the single operation detecting functions of the power conditioner 3a and the power conditioner 3b from simultaneously operating in synchronization, a time difference is set to the measurement of the fluctuation impedance ΔRp, so that the measurement of the fluctuation impedance ΔRp is individually executed.

For instance ,a timer is arranged in the power conditioner 3a and the power conditioner 3b. The single operation detecting function of the power conditioner 3a is first operated, and after a predetermined time has elapsed since the single operation detecting function of the power conditioner 3a has stopped, the single operation detecting function of the power conditioner 3b is operated, thereby preventing both single operation detecting functions from simultaneously operating.

Therefore, since the single operation detecting means 6 according to the preset invention performs the measurement of the line impedance with a predetermined time shift when the measurements of the line impedance value (fluctuation impedance ΔRp) by the other device (power conditioner 3b) operating in parallel with the self device (power conditioner 3a) are synchronized, the self device and the other device can individually measure the line impedance value by setting a time difference when the self device and the other device are measuring the line impedance value in synchronization during parallel operation, and thus the single operation detecting function is properly operated even during parallel operation.

The power conditioner according to the present invention determines the abnormality on the system side by changing the output current during operation to fluctuate the active output voltage and the active power and measuring the line impedance, and is applicable to the single operation detecting function of various power conditioners.

## Claims

1. A power conditioner (3, 3a, 3b) including a single operation detecting function, **characterized by** comprising:
a single operation detecting means (6) for changing an output current (IX) in synchronization with an alternating voltage on a system side thereby fluctuating an active power (PX) and an active voltage (VX) to be output to the system side, and measuring a line impedance value (R1) on said system side based on the fluctuated active power (PX) and the active voltage (VX).

2. A power conditioner (3, 3a, 3b) according to claim 1, **characterized in that**:
said single operation detecting means (6) performs an averaging process on a value around the time of fluctuation of the active power (PX) and the active voltage (VX) to be output to said system side and measures the line impedance value (R1) on the system side based on the average processed value when measuring the impedance value on said system side.

3. A power conditioner (3, 3a, 3b) according to claim 1, **characterized in that**:
said single operation detecting means (6) fluctuates the active power (PX) and the active voltage (VX) to be output to said system side from zero crossing to zero crossing.

4. A power conditioner (3, 3a, 3b) according to claim 1, **characterized in that**:
said single operation detecting means (6) gradually fluctuates the active power (PX) and the active voltage (VX) to be output to said system side.

5. A power conditioner (3, 3a, 3b) according to claim 1, **characterized in that**:
said single operation detecting means (6) alternately increases and decreases the active power (PX) and the active voltage (VX) to be output to said system side for every period so that a total amount of change of the active power (PX) and the active voltage (VX) is approximately zero.

6. A power conditioner (3, 3a, 3b) having a plurality of power conditioners according to any one of claims 1 to 5 connected to a same system and operated in parallel, **characterized in that**:
said single operation detecting means (6) compares a line impedance value (R1) measured in the past and a line impedance value (R1) currently measured, and when the current line impedance value (R1) is an impedance value greater than the past line impedance value (R1), determines that the other device simultaneously operating in parallel with the self device is also measuring the line impedance (R1) and does not determine the current line impedance value (R1) as an abnormal value.

7. A power conditioner (3, 3a, 3b) according to claim 6, **characterized in that**:
said single operation detecting means (6) does not determine the line impedance value (R1) as an abnormal value when the deviation of the line impedance value (R1) at start of change and end of change of the active power (PX) and the active voltage (VX) to be output to said system side is greater than or equal to a constant value.

8. A power conditioner (3, 3a, 3b) according to claim 6, **characterized in that**:
said single operation detecting means(6) executes the measurement of the line impedance (R1) value by shifting time with respect to each other when the measurements of the line impedance value (R1) of the self device and the other device operating in parallel are synchronized.
